# EUROPÄISCHE PATENTSCHRIFT

(11) **EP 3 696 075 B1**
(45) Veröffentlichungstag und Bekanntmachung des Hinweises auf die Patenterteilung: **03.04.2024**
(21) Anmeldenummer: 20155593.5
(22) Anmeldetag: 05.02.2020
(51) Int. Cl.: B63B 15/00, B63H 9/067

(54) **STARRSEGEL FÜR WASSERFAHRZEUGE, INSBESONDERE FÜR GROSSE SCHIFFE, UND WASSERFAHRZEUG MIT STARRSEGEL**
RIGID SAIL FOR WATERCRAFT, IN PARTICULAR FOR LARGE SHIPS, AND WATERCRAFT WITH A RIGID SAIL
VOILE RIGIDE POUR VÉHICULES NAUTIQUES, EN PARTICULIER POUR GRANDS NAVIRES ET VÉHICULE NAUTIQUE POURVU DE VOILE RIGIDE

(30) Priorität: 18.02.2019 DE 202019100897 U; 24.05.2019 DE 202019102941 U
(43) Veröffentlichungstag der Anmeldung: 19.08.2020
(73) Patentinhaber: Becker Marine Systems GmbH, 21079 Hamburg (DE)
(72) Erfinder: Kuhlmann, Henning, 21079 Hamburg (DE)
(74) Vertreter: RGTH

(56) Entgegenhaltungen:
- EP-A2- 2 366 621
- WO-A1-2013/070070
- DE-C- 405 701
- FR-A1- 3 029 888
- JP-A- S5 812 895
- JP-U- S5 911 100

## Beschreibung

Die vorliegende Erfindung betrifft ein Starrsegel für Wasserfahrzeuge, insbesondere für große Schiffe wie Schüttguttransporter, Tanker, Autotransporter oder Bulker, umfassend einen Mast und einen an dem Mast gelagerten ersten Tragflügelkörper mit einer Basis und einer Spitze, wobei der Mast durch die Basis in den ersten Tragflügelkörper eingeführt und innerhalb des ersten Tragflügelkörpers angeordnet ist. Ferner betrifft die vorliegende Erfindung ein Wasserfahrzeug mit einem Starrsegel.

### Technologischer Hintergrund

Starrsegel, auch Tragflächensegel genannt, werden in jüngerer Zeit immer häufiger als Hilfsantriebe auch für große Schiffe vorgeschlagen. Ein Starrsegel oder Tragflächensegel umfasst einen Tragflügelkörper, also eine aerodynamische Struktur, die anstelle eines herkömmlichen Segels an ein Wasserfahrzeug montiert wird. Starrsegel oder Tragflächensegel wirken analog zu Flugzeugflügeln und weisen meist eine starre oder feste Außenhaut auf. Durch die Verwendung von Starrsegeln oder Tragflächensegeln bei Schiffen, insbesondere bei großen Schiffen, kann eine zusätzliche Antriebsleistung bereitgestellt werden, durch die der Treibstoff- oder Kraftstoffverbrauch sowie die Abgasemissionen des Schiffes reduziert werden können.

Die WO 2014/001824 A1 offenbart ein Tragflächensegel oder Starrsegel umfassend einen vorderen Tragflügelabschnitt, einen hinteren Tragflügelabschnitt und einen Holm, wobei mindestens einer der Tragflügelabschnitte verschwenkt werden kann. Das Tragflächensegel umfasst eine Steuerung, um die individuelle Winkeleinstellung relativ zum Holm von mindestens einem Tragflügelabschnitt einzustellen.

Die WO 2018/087649 A1 offenbart ein Schiff, welches zumindest teilweise mit einem Segel angetrieben wird, wobei das Segel ein drehbar angeordnetes Doppelsegel aufweist. Das Doppelsegel umfasst einen vorderen Flügel und einen hinteren Flügel, die durch einen Spalt voneinander getrennt sind.

Die WO 2014/053029 A1 offenbart ein Starrsegel oder einen Starrflügel zur Befestigung an einem Wasserfahrzeug. Das Starrsegel umfasst ein Paar länglicher, steifer Paneele und ein Scharnierelement, welches ausgebildet ist, die Paneele miteinander zu koppeln und eine Schwenkbewegung der beiden Paneele relativ zueinander zu ermöglichen.

Die EP 2 366 621 A2 betrifft eine Segeleinheit umfassend eine Starrsegelanordnung mit einer Vielzahl von Starrsegelsektionen. Die Starrsegelsektionen weisen ein hohles Flügelprofil auf und sind vertikal übereinander angeordnet, sodass mit Ausnahme der untersten Sektion jede obenliegende Sektion in eine darunterliegende Sektion eingefahren werden kann.

Aus der US 2015/0158569 A1 ist ein Antriebsflügel für ein Wasserfahrzeug bekannt, umfassend ein Segel und einen Mast, welcher die Anströmkante des Antriebsflügels bildet. Der Mast und der Antriebsflügel sind segmentiert ausgebildet. Der Antriebsflügel weist mindestens zwei Flossen auf, welche beweglich ausgebildet sind.

Die WO 2013/070070 A1 offenbart ein Schiff mit einem Starrsegel und mit einer Maststruktur. Die Maststruktur umfasst einen Fuß und eine Mastspitze. Die Mastspitze ist mit einer primären Schwenkvorrichtung versehen, welche in etwas auf 1/3 der Gesamthöhe des Starrsegels angeordnet ist. Das Starrsegel kann um die Schwenkvorrichtung in die Horizontale verschwenkt werden.

Aus der DE 405701 C ist ein Verfahren zum Einstellen von Segelflächen bekannt, wobei das auf die Drehachse bezogene Moment der Strömungskräfte durch Verschieben der Segelfläche oder Teilen davon in ihrer Längenrichtung geregelt wird.

Die FR 3 029 888 A1 zeigt eine Takelage für den Antrieb eines Schiffes, umfassend ein Segel mit einem Mast, wobei an einer Endleiste des Segels eine weitere Segelfläche angeordnet ist.

Aus der JP S59-11100 U ist ein Verbundsegel bekannt, welches ein starres Segel und ein weiches Segel umfasst, das in Kombination mit dem starren Segel verwendet wird.

Es ist ein röhrenförmiger Körper in der Mitte des starren Segels vorgesehen. Eine auf dem Deck eines Wasserfahrzeugs angeordnete Stütze ist in den röhrenförmigen Körper eingesetzt. Ferner ist ein Lager zwischen dem röhrenförmigen Körper und der Stütze vorgesehen, sodass das starre Segel drehbar gestützt ist.

Die JP S58-12895 A offenbart ein Hauptsegel, welches über ein Scharnier auf einem Stützsegel beliebig drehbar gelagert. Das Hauptsegel ist mit einer Aussparung versehen, um das Stützsegel aufzunehmen, und wenn das Segel entfaltet ist, sind die Oberfläche des Hauptsegels und die auf dem Stützsegel gebildete Segelfläche in einem Körper vereint.

Für große Schiffe vorzusehende Starrsegel oder Tragflächensegel müssen entsprechend große Abmessungen aufweisen. Dies führt dazu, dass die Starrsegel extrem hohen aerodynamischen Belastungen ausgesetzt sind. Im Stand der Technik werden daher besonders stabil ausgeführte Masten verwendet, welche über die gesamte Höhe des Tragflügelkörpers des Starrsegels verlaufen. Dies führt zu einem hohen Gesamtgewicht des Starrsegels. Zudem können die großen und hohen Starrsegel eine Unterquerung von Brücken, Stromtrassen oder ähnlichen über befahrenen Gewässern angeordneten Strukturen unmöglich machen.

### Darstellung der Erfindung: Aufgabe, Lösung, Vorteile

Es ist Aufgabe der vorliegenden Erfindung ein Starrsegel oder Tragflächensegel bereitzustellen, welches ein geringeres Gesamtgewicht aufweist, kostengünstig herzustellen ist und eine Unterquerung von Brücken, Stromtrassen oder ähnlichen über befahrenen Gewässern angeordneten Strukturen nicht beeinträchtigt. Ferner ist es Aufgabe, ein Wasserfahrzeug mit einem Starrsegel oder Tragflächensegel bereitzustellen, mit dem die vorgenannten Vorteile erzielt werden.

Zur Lösung der der Erfindung zugrundeliegenden Aufgabe wird ein Starrsegel für Wasserfahrzeuge, insbesondere für große Schiffe wie Schüttguttransporter, Tanker, Autotransporter oder Bulker, umfassend einen Mast und einen an dem Mast gelagerten ersten Tragflügelkörper mit einer Basis und einer Spitze, wobei der Mast durch die Basis in den ersten Tragflügelkörper eingeführt und innerhalb des ersten Tragflügelkörpers angeordnet ist, vorgeschlagen, wobei sich der Mast ausgehend von der Basis nicht über eine maximale Höhe des ersten Tragflügelkörpers, insbesondere über weniger als 75 % der maximalen Höhe, erstreckt, und wobei eine Schwenkeinrichtung vorgesehen ist, wobei der Mast an einem dem ersten Tragflügelkörper abgewandten zweiten Ende in der Schwenkeinrichtung gelagert ist, wobei die Schwenkeinrichtung ausgebildet ist, den Mast in einem am Wasserfahrzeug angeordneten Zustand aus einer vertikalen Ausrichtung heraus um einen Winkel zu verschwenken.

Im Kontext der vorliegenden Erfindung können die Begriffe "Starrsegel", "Tragflächensegel" oder "Wingsail" synonym benutzt werden.

Das Starrsegel umfasst einen ersten Tragflügelkörper mit einer Basis und einer Spitze. Die Basis, auch Wurzel genannt, ist gegenüberliegend der Spitze angeordnet. Im an einem Wasserfahrzeug angeordneten Zustand ist das Starrsegel in der Regel vertikal ausgerichtet, wobei die Basis in vertikaler Richtung unten in der Nähe des Schiffskörpers angeordnet ist und wobei die Spitze in vertikaler Richtung oberhalb der Basis angeordnet ist.

Zur Anordnung des Starrsegels oder Tragflächensegels an dem Wasserfahrzeug ist ein Mast vorgesehen, welcher mit dem Wasserfahrzeug verbindbar ist. Der erste Tragflügelkörper ist wiederum an dem Mast angeordnet. Hierzu ist der Mast durch die Basis beziehungsweise durch eine untere Bodenplatte der Basis in den ersten Tragflügelkörper eingeführt und innerhalb des Tragflügelkörpers gelagert. Der erste Tragflügelkörper weist eine maximale Höhe auf. Diese maximale Höhe ist in der Regel der Abstand zwischen der Basis, oder einer Bodenplatte der Basis, und der Spitze des Tragflügelkörpers. Je nach der konkreten Ausgestaltung des Tragflügelkörpers kann die maximale Höhe jedoch auch ein anderer Abstand sein.

Ein besonderer Vorteil der vorliegenden Erfindung ergibt sich daraus, dass sich der Mast ausgehend von der Basis nicht über die maximale Höhe des ersten Tragflügelkörpers, insbesondere über weniger als 75 % der maximalen Höhe, erstreckt. Mit anderen Worten, wenn die maximale Höhe von der Basis bis zur Spitze des Tragflügels verläuft, so erstreckt sich der im Inneren des Tragflügelkörpers angeordnete Mast nicht bis zur Spitze des Tragflügelkörpers, und insbesondere ausgehend von der Basis nur über die unteren 75 % der maximalen Höhe. Der Mast ist somit nicht in dem verbleibenden Rest der maximalen Höhe bis zur Spitze, insbesondere nicht in den verbleibenden 25 % der maximalen Höhe, angeordnet. Dieser obere Bereich, in der Regel der von einem ersten, im Tragflügelkörper angeordneten oberen Ende des Mastes bis zur Spitze des ersten Tragflügelkörpers reichende Bereich, ist somit ein freistehender oder selbsttragender Bereich des Tragflügelkörpers, welcher nicht durch den Mast gestützt oder stabilisiert wird. Durch diese Maßnahme kann das Gesamtgewicht des Starrsegels oder des Tragflächensegels verringert und die Herstellung vergünstigt werden. Zudem wird durch den sich nicht über die maximale Höhe des Tragflügelkörpers angeordneten Mast der Biegedruck auf den Mast verringern, sodass der Mast leichter und mit weniger Materialeinsatz ausgeführt werden kann. Ein weiterer Vorteil eines sich nicht über die maximale Höhe des Tragflügelkörpers erstreckenden Masts besteht darin, dass im oberen, freistehenden oder selbsttragenden Bereich des Tragflügelkörpers das Material und damit das Gewicht weitestgehend an der Außenhaut und damit an der günstigsten Stelle angeordnet werden kann, um einer Biegung bzw. einem Biegedruck zu wiederstehen.

Der Mast kann im unteren Bereich des Tragflügelkörpers als zusätzliche Unterstützung fungieren, wenn der Tragflügelkörper im unteren, hochbelasteten Bereich nicht stark genug ist, das Biegemoment zu tragen. Die Anordnung eines sich nicht über die maximale Höhe des Tragflügelkörpers erstreckenden Masts führt somit zu einem verringerten Einsatz an Material für den Mast, sowie zu einem verringerten Materialeinsatz für die Außenhaut des Tragflügelkörpers, weil diese sonst gegebenenfalls im unteren Bereich des Tragflügelkörpers massiv verstärkt werden müsste.

Bevorzugt ist das Starrsegel in einem an einem Wasserfahrzeug angeordneten Zustand um mindestens 180°, weiter bevorzugt um mindestens 270°, insbesondere bevorzugt um mindestens 330°, ganz besonders bevorzugt um 360°, insbesondere um eine Longitudinalachse des Mastes, drehbar. Durch diese insbesondere freie Drehbarkeit kann das Segel bei allen herrschenden Windverhältnissen optimal in den Wind gestellt werden, um eine maximale Antriebsleistung für das Wasserfahrzeug zu erzielen.

Ferner können Sensoren, insbesondere Windsensoren, vorgesehen sein, mit welchen die aktuell herrschenden Windverhältnisse gemessen werden können. Zusätzlich kann eine Steuereinrichtung vorgesehen sein, welche die von den Sensoren, insbesondere den Windsensoren, aufgenommenen Daten verarbeitet und Steuerbefehle an das Starrsegel beziehungsweise an eine Vorrichtung zum Steuern des Starrsegels sendet. Zum Beispiel kann mittels der Steuereinrichtung der Anstellwinkel für das Starrsegel zum Wind bestimmt werden und das Starrsegel entsprechend, bevorzugt durch einen Motor, in den Wind gestellt werden.

Der Mast kann als ein im Wesentlichen hohles Rohr, mit einem bevorzugt kreisförmigen oder rechteckigen Querschnitt, ausgebildet sein.

Der Mast kann ein Metall, insbesondere Stahl, oder einen Verbundwerkstoff oder einen Kohlefaserwerkstoff umfassen oder daraus bestehen.

Die minimale Höhe des Segels, bevorzugt gemessen von der Basis, oder im am Schiff angeordneten Zustand vom Schiffsdeck, bis zur Spitze beträgt bevorzugt 10 m, weiter bevorzugt 20 m, insbesondere bevorzugt mindestens 30 m. Die minimale Segelfläche beträgt bevorzugt mindestens 200 m², weiter bevorzugt mindestens 300 m², ganz besonders bevorzugt mindestens 400 m². Das Starrsegel kann eine Höhe, insbesondere eine maximale Höhe, von mindestens 50 m, bevorzugt von mindestens 70 m, insbesondere bevorzugt von mindestens 80 m, aufweisen.

Die Effizienz des Starrsegels kann mit der aerodynamischen Gleitzahl, das heißt dem Quotienten aus dem Auftriebsbeiwert und dem Widerstandsbeiwert, quantifiziert werden.

Bevorzugt weist das Starrsegel eine aerodynamische Gleitzahl von mindestens 4, bevorzugt von mindestens 7, ganz besonders bevorzugt von mindestens 10, auf.

Ferner kann vorgesehen sein, dass die Kennzahl (Segelfläche [m²])^{1/2}/ (Gewicht [t])^{1/3} des Starrsegels mindestens 9, bevorzugt mindestens 11, besonders bevorzugt mindestens 13, ist.

Mit weiterem Vorteil kann vorgesehen sein, dass sich der Mast über weniger als 50 %, bevorzugt über weniger als 40 %, besonders bevorzugt über weniger als 35 %, der maximalen Höhe erstreckt. Durch diese Maßnahme können das Gewicht des Starrsegels und der Biegedruck auf den Mast weiter reduziert werden.

Es ist von besonderem Vorteil, wenn sich der Mast nur über das ausgehend von der Basis gemessene untere Drittel der maximalen Höhe erstreckt.

Bevorzugt ist vorgesehen, dass der Mast an einem ersten Ende im ersten Tragflügelkörper in einem ersten Lager gelagert ist, und/oder dass der Mast in einem zweiten, insbesondere im Bereich der Basis angeordneten, Lager gelagert ist.

Das bevorzugte zweite Lager muss nicht direkt in der Basis des Tragflügelkörpers angeordnet sein, sondern kann sich auch oberhalb der Basis näher am ersten Lager, beispielsweise zwischen 5 %, bevorzugt 10 %, und 30 % der maximalen Höhe befinden. Bevorzugt stellen das erste Lager und das zweite Lager eine Zweipunktlagerung für den Tragflügelkörper dar.

Erfindungsgemäß ist eine Schwenkeinrichtung vorgesehen, wobei der Mast an einem dem ersten Tragflügelkörper abgewandten zweiten Ende in der Schwenkeinrichtung gelagert ist, wobei die Schwenkeinrichtung ausgebildet ist, den Mast in einem am Wasserfahrzeug angeordneten Zustand aus einer vertikalen Ausrichtung heraus um einen Winkel zu verschwenken.

Für die Lagerung des Mastes in der Schwenkeinrichtung kann ein drittes Lager vorgesehen sein. Durch die Schwenkeinrichtung kann das Starrsegel, insbesondere der erste Tragflügelkörper, aus der vertikalen Ausrichtung verschwenkt beziehungsweise geneigt werden. Hierdurch wird es möglich, die ausgehend vom Schiffsdeck in vertikaler Richtung nach oben gemessene vertikale Höhe des Starrsegels zu verringern. Durch die Schwenkeinrichtung kann das Starrsegel, insbesondere der erste Tragflügelkörper, zumindest teilweise umgelegt werden, sodass für das Wasserfahrzeug eine Unterquerung von über einem Gewässer befindlichen Strukturen, wie Brücken, Stromleitungen etc. möglich wird.

Das zweite Ende des Mastes ist bevorzugt, insbesondere in der Longitudinalrichtung des Mastes gesehen, dem ersten Ende des Mastes gegenüber angeordnet.

Vorteilhafterweise beträgt der Winkel mindestens 45°, bevorzugt mindestens 60°, insbesondere bevorzugt mindestens 80°, ganz besonders bevorzugt im Wesentlichen 90°.

Beträgt der Winkel mindestens 45°, 60°, 80° oder im Wesentlichen 90°, so lässt sich das Starrsegel, insbesondere der erste Tragflügelkörper, aus der vertikalen Ausrichtung derart verschwenken, dass die Höhe des Wasserfahrzeuges deutlich reduziert und eine Unterquerung von Brücken, Stromleitungen etc. im Bereich von Gewässern ermöglicht wird. Insbesondere wenn der Winkel mindestens 80° oder bevorzugt im Wesentlichen 90° beträgt, lässt sich das Starrsegel quasi vollständig umlegen.

Mit besonderem Vorteil kann vorgesehen sein, dass der Mast am zweiten Ende eine Querachse aufweist, welche in einer Achsaufnahme der Schwenkeinrichtung schwenkbar gelagert ist.

Die Querachse kann als ein Rohr oder hohles Rohr ausgebildet sein. Die Querachse ist am unteren, zweiten Ende des Mastes bevorzugt in einem rechten Winkel quer zur Longitudinalachse des Mastes angeordnet. Endseitig kann die Querachse in einer Achsaufnahme, beziehungsweise in einem Achslager, der Schwenkeinrichtung schwenkbar gelagert sein, sodass das Starrsegel, insbesondere der erste Tragflügelkörper, um die Querachse mittels der Schwenkeinrichtung verschwenkbar ist.

Die Querachse kann als Teil des Mastes oder als Teil der Schwenkeinrichtung betrachtet werden.

Bevorzugt ist vorgesehen, dass die Schwenkeinrichtung einen am zweiten Ende des Mastes angeordneten Teilzahnkranz und ein am Wasserfahrzeug anordbares und mit dem Teilzahnkranz im Eingriff stehendes Antriebsmittel, insbesondere ein Zahnrad oder eine Kette, umfasst.

Der Teilzahnkranz kann als halbkreisförmiger, drittelkreisförmiger oder viertelkreisförmiger Zahnkranz ausgebildet sein. Im am Schiff angeordneten Zustand greift der Teilzahnkranz in ein zugeordnetes Antriebsmittel, insbesondere ein Zahnrad oder eine Kette, ein, welches mit dem Schiff verbunden ist. Durch Betätigung des Antriebsmittels, insbesondere des Zahnrades oder der Kette, wird der Teilzahnkranz verfahren und damit der mit dem Teilzahnkranz verbundene Mast des Starrsegels verschwenkt, wodurch ein Umlegen oder ein Verschwenken des Starrsegels möglich wird.

Ferner kann die Schwenkeinrichtung auch zwei oder mehr Teilzahnkränze aufweisen, wobei die zwei oder mehr Teilzahnkränze bevorzugt nebeneinander und/oder parallel zueinander angeordnet sind.

Grundsätzlich ist es auch möglich, dass die Schwenkeinrichtung einen Hydraulikzylinder, eine Seilwinde oder ähnliches umfasst, um ein Verschwenken des Mastes beziehungsweise des Starrsegels zu ermöglichen.

Die Schwenkeinrichtung kann ferner eine Führung für den Teilzahnkranz aufweisen, durch den insbesondere Drehmomente auf das Starrsegel, welche zu einem Verdrehen des Mastes und somit auch zu einem Verdrehen des Teilzahnkranzes führen könnten, aufgefangen werden können.

Zum Umlegen des Starrsegels wird dieses bevorzugt zuerst in eine 90° Ausrichtung zur Längsachse des Wasserfahrzeuges gedreht bevor die Schwenkeinrichtung betätigt wird.

Bevorzugt weist der erste Tragflügelkörper des Starrsegels eine Anströmkante und eine Endleiste auf, und ein zweiter Tragflügelkörper, insbesondere eine Flosse, ist an der Endleiste des ersten Tragflügelkörpers schwenkbar angeordnet.

Grundsätzlich können auch weitere Tragflügelkörper vorgesehen sein, es ist aber bevorzugt, dass das Starrsegel genau einen, nämlich den ersten Tragflügelkörper, oder genau zwei gegeneinander verschwenkbare Tragflügelkörper, nämlich den ersten Tragflügelkörper und den zweiten Tragflügelkörper, umfasst. Insbesondere bevorzugt ist an der Anströmkante des ersten Tragflügelkörpers kein weiterer Tragflügelkörper angeordnet, so dass die Anströmkante des ersten Tragflügelkörpers direkt von der Luft angeströmt wird, und/oder an einer Endleiste des zweiten Tragflügelkörpers ist kein weiterer Tragflügelkörper angeordnet.

Durch die schwenkbare Anordnung des zweiten Tragflügelkörpers, insbesondere der Flosse, an der Endleiste des ersten Tragflügelkörpers, kann der Auftrieb und somit die Antriebsleistung des Starrsegels bei unterschiedlichen Windverhältnissen optimiert werden.

Auch der zweite Tragflügelkörper kann eine Anströmkante und eine Endleiste aufweisen. Darüber hinaus kann der zweite Tragflügelkörper zusammen mit dem ersten Tragflügelkörper mittels der Schwenkeinrichtung umgelegt oder verschwenkt werden.

Das Verschwenken des zweiten Tragflügelkörpers gegenüber dem ersten Tragflügelkörper kann durch einen entsprechenden Verstellmechanismus ermöglicht werden. Der Verstellmechanismus kann elektrische Motoren oder Verbrennungsmotoren umfassen. Ferner kann der Verstellmechanismus Zahnkränze, Zahnräder, Ketten, Hydraulikzylinder, Seilzüge oder ähnliches aufweisen.

Der zweite Tragflügelkörper ist bevorzugt nicht am Mast, sondern ausschließlich an dem ersten Tragflügelkörper angeordnet. Entlang der Profilsehne des ersten Tragflügelkörpers gesehen befindet sich der Mast bevorzugt in etwa in der Mitte oder in der vorderen Hälfte des ersten Tragflügelkörpers. Besonders bevorzugt ist der Mast an einer Position entsprechend etwa 25% bis 40%, weiter bevorzugt 30% bis 35%, der Länge der Profilsehne von der Anströmkante beabstandet angeordnet.

Der erste und/oder der zweite Tragflügelkörper können ein symmetrisches oder ein asymmetrisches Profil, insbesondere ein NACA-Profil aufweisen. Ferner können der erste und/oder insbesondere der zweite Tragflügelkörper ein Tuchsegel umfassen oder als ein Tuchsegel ausgebildet sein.

Zwischen dem ersten Tragflügelkörper und dem zweiten Tragflügelkörper kann ein im Wesentlichen parallel zu der Endleiste des ersten Tragflügelkörpers und/oder der Anströmkante des zweiten Tragflügelkörpers verlaufender Spalt vorgesehen sein, welcher weiter bevorzugt auch beim Verschwenken des zweiten Tragflügelkörpers bestehen bleibt. Durch Vorsehen eines Spaltes kann insbesondere bei extremen Anstellwinkeln oder starken Winden ein Strömungsabriss an dem ersten Tragflügelkörper und/oder an dem zweiten Tragflügelkörper verhindert werden.

Auch der zweite Tragflügelkörper kann eine Basis und eine Spitze aufweisen.

Besonders bevorzugt sind an der Spitze des ersten Tragflügelkörpers und/oder des zweiten Tragflügelkörpers keine Winglets oder ähnliches angeordnet.

Mit weiterem Vorteil kann vorgesehen sein, dass der zweite Tragflügelkörper mehrere Segmente aufweist. In Richtung von der Basis zur Spitze des zweiten Tragflügelkörpers gesehen sind die Segmente bevorzugt übereinander angeordnet. Dabei ist es von besonderem Vorteil, wenn die Segmente unabhängig voneinander gegenüber dem ersten Tragflügelkörper verschwenkbar sind.

Aufgrund von Aufbauten auf dem Wasserfahrzeug können sich die Strömungsverhältnisse in vertikaler Richtung gesehen über die Höhe des Starrsegels, insbesondere des ersten Tragflügelkörpers und/oder des zweiten Tragflügelkörpers, ändern, sodass es besonders vorteilhaft ist, wenn die Segmente einzeln ansteuerbar sind, um eine optimierte Auftriebs- und Antriebsleistung zu erhalten.

Weiter bevorzugt kann vorgesehen sein, dass der zweite Tragflügelkörper teleskopierbar ausgeführt ist, wobei bevorzugt je ein oberes Segment in ein benachbart angeordnetes unteres Segment einfahrbar ist.

Unter einem oberen Segment und einem unteren Segment werden jeweils Segmente verstanden, welche im am Schiff angeordneten Zustand oberhalb bzw. unterhalb eines benachbarten Segments angeordnet sind. Zum Teleskopieren des zweiten Tragflügelkörpers beziehungsweise zum Einfahren eines jeweils oberen Segments in ein benachbartes unteres Segment sind die Segmente vorteilhafter Weise als Hohlkörper ausgebildet.

Lediglich das unterste Segment, welches insbesondere die Basis des zweiten Tragflügelkörpers umfasst, ist nicht in ein weiteres Segment einfahrbar. Jedoch ist es grundsätzlich denkbar, dass dieses unterste Segment in den Schiffkörper versenkbar ist.

Durch die Teleskopierbarkeit des zweiten Tragflügelkörpers, insbesondere der Flosse, wird die gesamte Segelfläche deutlich reduziert. Ist nur der zweite Tragflügelkörper teleskopierbar, so kann die Mechanik des Starrsegels insgesamt einfach gehalten werden, da der erste Tragflügelkörper stets den Großteil der Biegebelastungen aufnimmt, sodass es nicht zu einem Verklemmen des Teleskopmechanismus kommt. Im Gegensatz zu vollteleskopierbaren Starrsegeln ist ein Starrsegel, bei dem nur der zweite Tragflügelkörper teleskopierbar ist, mechanisch weniger aufwendig.

Analog kann auch der erste Tragflügelkörper Segmente aufweisen. Ebenso wie der zweite Tragflügelkörper können die Segmente des ersten Tragflügelkörpers separat und individuell verschwenkbar sein. Zudem kann auch der erste Tragflügelkörper teleskopierbar ausgebildet sein, sodass die Segmente des ersten Tragflügelkörpers ineinander eingefahren werden können. In diesem Fall können auch die Segmente des ersten Tragflügelkörpers Hohlkörper sein.

Bevorzugt ist jedoch vorgesehen, dass der erste Tragflügelkörper Segmente aufweist, welche fest miteinander verbunden sind. Die Ausgestaltung des ersten Tragflügelkörpers mit Segmenten ist herstellungstechnisch vorteilhaft, da die einzelnen Segmente unabhängig voneinander produziert und anschließend aneinander befestigt werden können.

Mit Vorteil ist vorgesehen, dass die Segmente, insbesondere des zweiten Tragflügelkörpers, in einem Schienensystem geführt sind.

Das Schienensystem kann dabei innerhalb des zweiten Tragflügelkörpers, an dessen Anströmkante oder an der Endleiste des ersten Tragflügelkörpers angeordnet sein. Die Segmente des zweiten Tragflügelkörpers werden entlang des Schienensystems ein- und ausgefahren. Ist das Schienensystem im Inneren des zweiten Tragflügelkörpers angeordnet, so kann vorgesehen sein, dass auch das Schienensystem teleskopierbar ausgeführt ist. Auch kann eine starre Schiene an der Endleiste des ersten Tragflügelkörpers angeordnet sein, auf welcher die teleskopierbaren Segmente des zweiten Tragflügelkörpers laufen.

Mit weiterem Vorteil weist der erste Tragflügelkörper und/oder der zweite Tragflügelkörper Rippen und/oder Holme auf. Der erste und/oder zweite Tragflügelkörper kann bevorzugt ähnlich einem Flugzeugflügel aufgebaut sein. Die Rippen verlaufen parallel zu der Profilsehne des ersten und/oder des zweiten Tragflügelkörpers und können in Abständen von mindestens 1 m, bevorzugt mindestens 1,5 m, insbesondere bevorzugt von mindestens 2 m angeordnet sein. Die Längsholme, welche bevorzugt in einem rechten Winkel zu den Rippen angeordnet sind, können einen Abstand von mindestens 1 m, bevorzugt von mindestens 2 m, aufweisen. Es können zwei, drei oder mehr Holme vorgesehen sein.

Bevorzugt sind die Rippen und/oder die Holme hinsichtlich der maximalen Höhe in dem Bereich angeordnet, in welchem der Mast im Inneren des ersten Tragflügelkörpers angeordnet ist.

Die Rippen und Holme stellen dann gewissermaßen eine Verstärkung in diesem Bereich dar, darüber hinaus können die Rippen und/oder Holme bevorzugt auch über die gesamte Höhe des ersten und/oder des zweiten Tragflügelkörpers angeordnet sein und somit den gesamten ersten und/oder zweiten Tragflügelkörper verstärken. Besonders bevorzugt sind die Holme, beziehungsweise mindestens ein Holm, über die gesamte Höhe des ersten und/oder des zweiten Tragflügelkörpers angeordnet, und weiter insbesondere bis in die Spitze des ersten und/oder des zweiten Tragflügelkörpers verlaufend angeordnet.

Darüber hinaus können weitere Verstärkungseinrichtungen, insbesondere im Bereich des Mastes, vorgesehen sein.

Der erste Tragflügelkörper und/oder der zweite Tragflügelkörper können eine Außenhaut aufweisen, wobei die Außenhaut insbesondere steif ausgebildet ist und weiter bevorzugt eine Aluminiumsandwich-Struktur oder eine Glasfaserstruktur aufweist. Die Außenhaut bildet die Seitenwände des jeweiligen Tragflügelkörpers.

Im Falle einer Aluminiumsandwich-Struktur weist die Außenhaut zwei außen liegende Platten, insbesondere Aluminiumplatten, auf, wobei sich zwischen den beiden Platten eine weitere Aluminiumstruktur befindet, welche in Art eines Wellbleches ausgebildet ist.

Insbesondere eine Aluminiumsandwich-Struktur weist eine besonders große Festigkeit und/oder Stabilität bei gleichzeitig äußerst geringem Gewicht auf.

Grundsätzlich ist es aber auch denkbar, dass die Außenhaut des ersten Tragflügelkörpers und/oder des zweiten Tragflügelkörpers aus einem Stahl oder einem Verbundwerkstoff oder einem Kohlefaserwerkstoff oder einem Textil, beispielsweise einem Segeltuch, besteht.

Bevorzugt ist vorgesehen, dass sich das Starrsegel, insbesondere der erste Tragflügelkörper und/oder der zweite Tragflügelkörper, in Richtung der Spitze hin verjüngt.

In einer Seitenansicht ist das Starrsegel zumindest bereichsweise in etwa dreiecksförmig ausgebildet. Durch die sich nach oben hin verjüngende Ausgestaltung des ersten und/oder des zweiten Tragflügelkörpers werden aerodynamische Vorteile erzielt. insbesondere wird eine elliptische Auftriebsverteilung bereitgestellt, welche eine große Antriebsleistung bei gleichzeitig geringen Biegelasten ermöglicht.

Bevorzugt ist das Starrsegel bei Wasserfahrzeugen nachrüstbar, wobei die Brücke der Wasserfahrzeuge bevorzugt im vorderen Bereich oder Bugbereich des Schiffes angeordnet ist.

Mit weiterem Vorteil weist der erste Tragflügelkörper und/oder der zweite Tragflügelkörper eine Sollbruchstelle auf, wobei die Sollbruchstelle insbesondere oberhalb des Mastes, weiter insbesondere oberhalb des ersten Lagers angeordnet ist.

Aufgrund der großen Segelfläche des Starrsegels können bei starken Winden große Biegelasten auf das Segel wirken. Diese können zu einer Beschädigung der Struktur des Wasserfahrzeugs führen. Ferner besteht die Gefahr, dass das Wasserfahrzeug kentert. Hierfür kann eine Sollbruchstelle vorgesehen sein, welche dafür sorgt, dass der obere Teil des Starrsegels, insbesondere des ersten Tragflügelkörpers und/oder des zweiten Tragflügelkörpers unter einem zu hohen Biegedruck wegbricht, sodass eine Beschädigung der Struktur des Schiffes oder Wasserfahrzeugs, oder ein Kentern des Schiffes oder Wasserfahrzeuges, vermieden wird.

Die Sollbruchstelle kann beispielsweise durch eine Perforierung oder eine Materialausdünnung bereitgestellt werden.

Besonders bevorzugt weist der erste Tragflügelkörper eine Bodenplatte in der Basis auf und der zweite Tragflügelkörper weist eine Bodenplatte in der Basis auf, wobei die Bodenplatte des zweiten Tragflügelkörpers in einem Winkel zu der Bodenplatte des ersten Tragflügelkörpers steht.

Dies führt dazu, dass die lichte Höhe unterhalb des zweiten Tragflügelkörpers erhöht wird und Kollisionen mit Deckaufbauten des Wasserfahrzeuges vermieden werden. Darüber hinaus kann das Starrsegel durch die Anschrägung der Basis des zweiten Tragflügelkörpers um einen kleinen Winkel aus der Vertikalen verschwenkt werden, ohne dass das Starrsegel zuvor gedreht werden muss.

Eine weitere Lösung der der Erfindung zugrundeliegenden Aufgabe besteht in der Bereitstellung eines Wasserfahrzeuges mit einem vorbeschriebenen Starrsegel.

Insbesondere kann das Wasserfahrzeug mehrere Starrsegel aufweisen.

Ferner kann die Schwenkeinrichtung zumindest teilweise im Schiffsrumpf angeordnet sein, um eine platzsparende Anordnung zu ermöglichen.

Besonders bevorzugt ist das Wasserfahrzeug ein großes Schiff wie ein Tanker, ein Schüttguttransporter, eine Autotransporter oder ein Bulker. Insbesondere bevorzugt ist das Wasserfahrzeug kein Containerschiff.

Eine weitere, nicht von der Erfindung umfasste Lösung besteht in der Bereitstellung einer vorbeschriebenen Schwenkeinrichtung für ein vorbeschriebenes Starrsegel, umfassend einen an einem dem ersten Tragflügelkörper abgewandten zweiten Ende des Mastes anordbaren Teilzahnkranz und ein am Wasserfahrzeug anordbares und mit dem Teilzahnkranz im Eingriff stehendes Antriebsmittel, insbesondere ein Zahnrad oder eine Kette, und umfassend einen Hydraulikzylinder.

### Kurze Beschreibung der Figuren

Die Erfindung wird anhand der beigefügten Figuren näher erläutert. Es zeigen:
Fig. 1 ein Starrsegel in einer Seitenansicht,
Fig. 2 einen Querschnitt durch das Starrsegel,
Fig. 3 eine Außenhaut des Starrsegels im Querschnitt,
Fig. 4 eine Rückansicht des Starrsegels,
Fig. 5 ein Starrsegel mit einer teleskopierbaren Flosse, und
Fig. 6 eine Schwenkeinrichtung.

### Ausführliche Beschreibung der Figuren

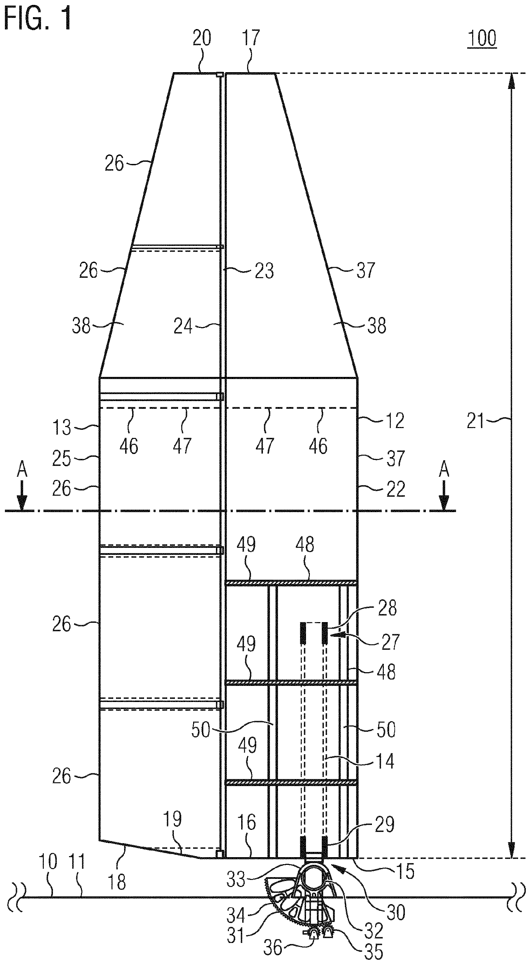

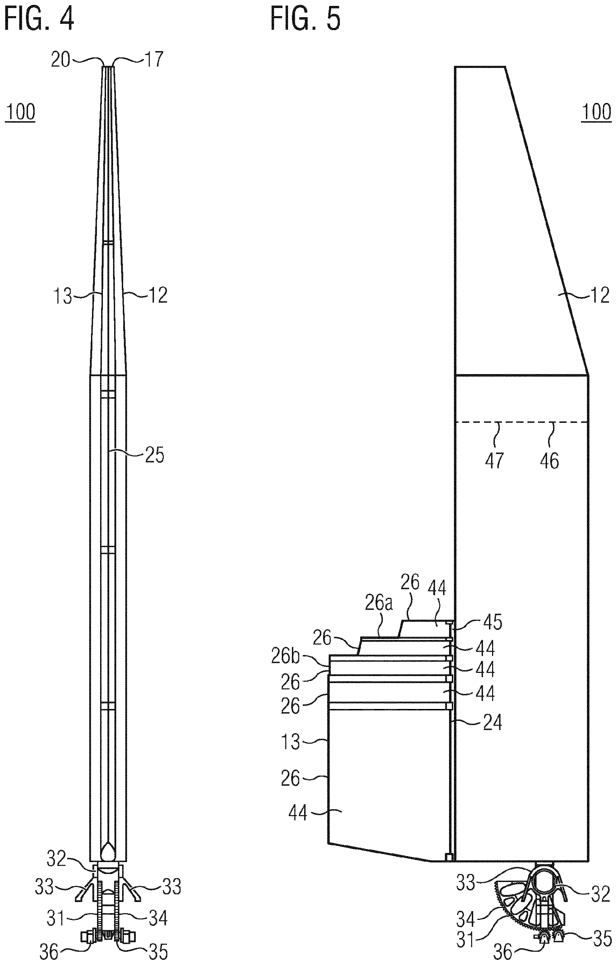

Fig. 1 zeigt ein Starrsegel 100, welches auf einem Wasserfahrzeug 10 angeordnet ist. Von dem Wasserfahrzeug ist lediglich das Schiffsdeck 11 gezeigt. Das Starrsegel 100 ist in einer Seitenansicht dargestellt und umfasst einen ersten Tragflügelkörper 12 und einen zweiten Tragflügelkörper 13. Der erste Tragflügelkörper 12 ist über einen Mast 14 mit dem Schiffsdeck 11 verbunden. Der erste Tragflügelkörper 12 weist eine erste Basis 15 mit einer ersten Bodenplatte 16 sowie eine erste Spitze 17 auf. Analog weist der zweite Tragflügelkörper 13 eine zweite Basis 18 mit einer zweiten Bodenplatte 19 und eine zweite Spitze 20 auf. Der Mast 14 ist durch die erste Basis 15 beziehungsweise die erste Bodenplatte 16 in den ersten Tragflügelkörper 12 eingeführt und innerhalb des ersten Tragflügelkörpers 12 angeordnet. Ausgehend von der ersten Basis 15 erstreckt sich der Mast 14 über ca. ein Drittel der zwischen der ersten Basis 15 und der ersten Spitze 17 gemessenen maximalen Höhe 21. Ferner weisen der erste Tragflügelkörper 12 sowie der zweite Tragflügelkörper 13 eine jeweilige Anströmkante 22, 24 und eine Endleiste 23, 25 auf. Der zweite Tragflügelkörper 13 ist an der Endleiste 23 des ersten Tragflügelkörpers 12 schwenkbar angeordnet. Dabei ist der zweite Tragflügelkörper 13 ausschließlich an dem ersten Tragflügelkörper 12 gelagert und insbesondere nicht an dem Mast 14 gelagert. Der zweite Tragflügelkörper 13 weist Segmente 26 auf, welche, wie in Fig. 5 gezeigt, teleskopierbar sind. Der Mast 14 ist an einem ersten Ende 27 in einem ersten Lager 28 im ersten Tragflügelkörper 12 gelagert. Eine zweite Lagerung des Mastes 14 erfolgt in einem zweiten Lager 29 im Bereich der ersten Basis 15 des ersten Tragflügelkörpers 12. Die Segmente 26 des zweiten Tragflügelkörpers 13 sind einzeln und unabhängig voneinander gegenüber dem ersten Tragflügelkörper 12 verschwenkbar. Ferner ist das Starrsegel um den Mast 14 um 360° drehbar.

An einem zweiten Ende 30, welches dem ersten Ende 27 des Mastes 14 gegenüberliegt, ist eine Schwenkeinrichtung 31 angeordnet, welche zumindest teilweise unterhalb des Schiffsdecks 11 angeordnet ist. Zur Lagerung des Mastes 14 an der Schwenkeinrichtung 31 weist der Mast 14 am zweiten Ende 30 eine Querachse 32 auf, welche in einer Achsaufnahme 33 der Schwenkeinrichtung 31 drehbar gelagert ist. Ferner ist am zweiten Ende 30 des Mastes 14 ein Teilzahnkranz 34 angeordnet, welcher mit einem mindestens ein Zahnrad 35 umfassenden Antriebsmittel im Eingriff steht. Durch Betätigung des Antriebsmittels 36 wird der Teilzahnkranz 34 um die Achsaufnahme 33 gedreht, sodass auch der mit dem Teilzahnkranz 34 verbundene Mast 14 und folglich das gesamte Starrsegel 100 um die Querachse 32 beziehungsweise die Achsaufnahme 33 verschwenkt wird. Hierdurch kann das Starrsegel 100 umgelegt werden. Zum Legen des Starrsegels 100 wird das Starrsegel 100, insbesondere der erste Tragflügelkörper 12 beziehungsweise der zweite Tragflügelkörper 13 zunächst aus der in Fig. 1 gezeigten Ausrichtung um 90° um den Mast 14 gedreht. Anschließend kann das Starrsegel 100 mittels der Schwenkeinrichtung 31 um bis zu 90° umgelegt werden. Insbesondere für kleinere Verschwenkungen und um Behinderungen durch Deckaufbauten zu vermeiden, ist die zweite Basis 18 des zweiten Tragflügelkörpers 13 angeschrägt beziehungsweise die zweite Bodenplatte 19 des zweiten Tragflügelkörpers 13 steht in einem Winkel zur ersten Bodenplatte 16 des ersten Tragflügelkörpers 12. Der erste Tragflügelkörper 12 weist ebenfalls Segmente 37 auf, welche jedoch fest miteinander verbunden sind. Ferner weisen sowohl der erste Tragflügelkörper 12 als auch der zweite Tragflügelkörper 13 eine Außenhaut 38 auf. Der erste Tragflügelkörper 12 und der zweite Tragflügelkörper 13 weisen einen sich nach oben zur jeweiligen Spitze 17, 20 hin verjüngenden Flügelumriss auf.

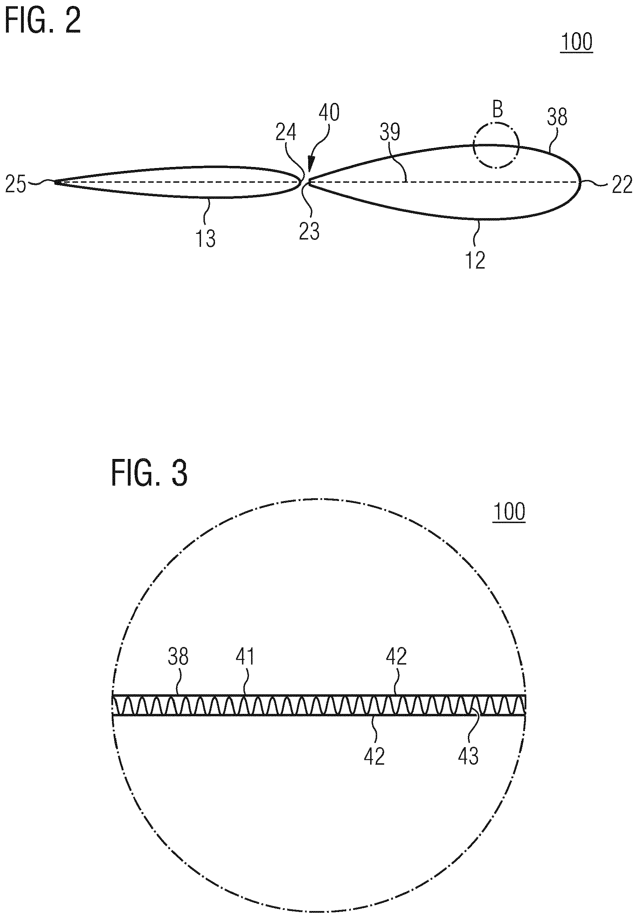

Fig. 2 zeigt einen Schnitt durch die Ebene A-A nach Fig. 1. Der erste Tragflügelkörper 12 weist eine Anströmkante 22 und eine Endleiste 23 auf, zwischen denen die Profilsehne 39 verläuft. Der zweite Tragflügelkörper 13 ist an der Endleiste 23 des ersten Tragflügelkörpers 12 angeordnet. Zwischen dem ersten Tragflügelkörper 12 und dem zweiten Tragflügelkörper 13 ist ein Spalt 40 ausgebildet.

Fig. 3 zeigt einen Querschnitt im Bereich B nach Fig. 2 durch die Außenhaut 38 des ersten Tragflügelkörpers 12. Die Außenhaut 38 umfasst eine Aluminiumsandwich-Struktur 41, bei der zwischen zwei Aluminiumplatten 42 ein gewelltes Aluminiumblech 43 angeordnet ist.

Fig. 4 zeigt eine Rückansicht des Starrsegels 100. Das Starrsegel 100 beziehungsweise der erste Tragflügelkörper 12 und der zweite Tragflügelkörper 13 verjüngen sich auch im Frontalprofil zur Spitze 17, 20 hin.

Fig. 5 zeigt eine weitere Seitenansicht des Starrsegels 100. Der zweite Tragflügelkörper 13 ist teleskopierbar ausgestaltet, wobei jeweils ein oberes Segment 26a in ein unteres Segment 26b einführbar ist. Dafür sind die Segmente 26, 26a, 26b als Hohlkörper 44 ausgebildet. Zum Verfahren und Einführen des jeweils oberen Segments 26a und des jeweils unteren Segments 26b ist ein ebenfalls teleskopierbares, an der Anströmkante 24 des zweiten Tragflügelkörpers 13 vorgesehenes Schienensystem 45 vorgesehen. Alternativ kann eine starre Schiene an der Endleiste 23 des ersten Tragflügelkörpers 12 angeordnet sein, auf welcher die teleskopierbaren Segmente 26, 26a, 26b laufen. Wie ferner in den Fig. 1 und 5 gezeigt, weist zumindest der erste Tragflügelkörper 12 und der zweite Tragflügelkörper 13 eine Sollbruchstelle 46 oberhalb des ersten Endes 27 beziehungsweise des ersten Lagers 28 des Mastes 14 auf. Die Sollbruchstelle 46 kann beispielsweise durch eine Perforierung 47 des ersten Tragflügelkörpers 12 beziehungsweise des zweiten Tragflügelkörpers 13 realisiert werden.

Zurückkehrend zu Fig. 1 sind Verstärkungselemente 48 für den ersten Tragflügelkörper 12 gezeigt. Die Verstärkungskörper 48 sind als von der Anströmkante 22 zur Endleiste 23 des ersten Tragflügelkörpers 12 angeordnete Rippen 49 und in etwa parallel zum Mast 14 ausgerichtete vertikal verlaufende Holme 50 ausgebildet. Die Rippen 49 und Holme 50 sind nur im unteren Drittel im Bereich des Mastes 14 dargestellt. Es ist aber bevorzugt, dass die Rippen 49 und Holme 50 in abnehmender Dichte bis in die Spitze 17 des ersten Tragflügelkörpers 12 und, falls der zweite Tragflügelkörper 13 Rippen und/oder Holme aufweist, gegebenenfalls auch bis in die Spitze 20 des zweiten Tragflügelkörpers 13 reichen.

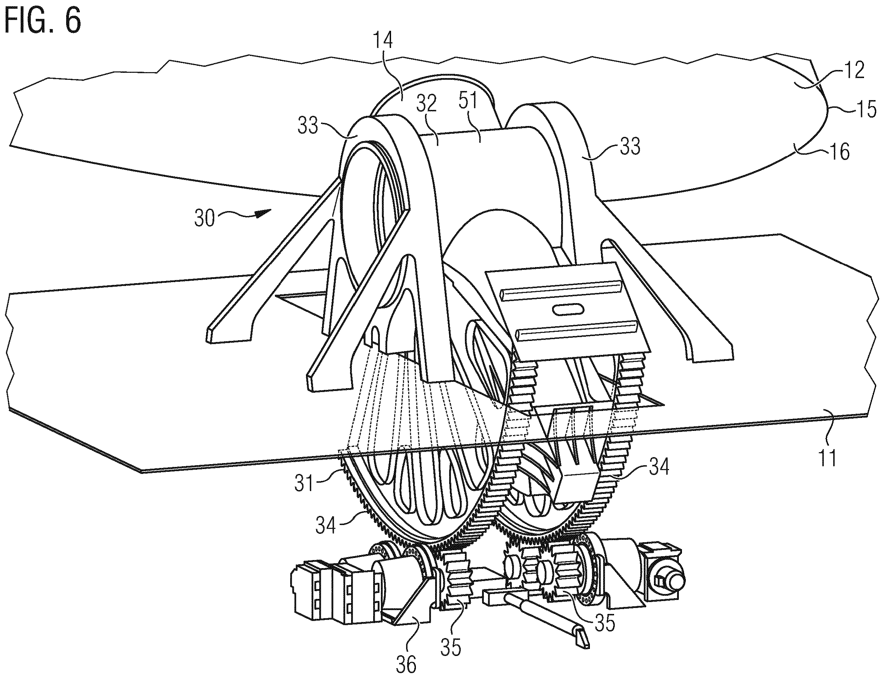

Fig. 6 zeigt die Schwenkeinrichtung 31. Durch die erste Bodenplatte 16 der ersten Basis 15 des ersten Tragflügelkörpers 12 ist der Mast 14 geführt. Am zweiten Ende 30 des Mastes 14 ist eine Querachse 32 in Form eines Hohlrohres 51 angeordnet. Endseitig ist das Hohlrohr 51 in einer Achsaufnahme 33 angeordnet. Ferner befindet sich am zweiten Ende 30 des Mastes 14 ein Teilzahnkranz 34. Die Schwenkeinrichtung 31 umfasst ferner ein Antriebsmittel 36, welches Zahnräder 35 umfasst. Durch Antreiben der Zahnräder 35 wird der Teilzahnkranz 34 um die in der Achsaufnahme 33 gelagerte Querachse 32 verschwenkt und dadurch wird auch der Mast 14 und der an dem Mast 14 befestigte erste Tragflügelkörper 12 samt dem daran befestigten zweiten Tragflügelkörper 13 umgelegt.

### Liste der Bezugszeichen

- 100: Starrsegel
- 10: Wasserfahrzeug
- 11: Schiffsdeck
- 12: Erster Tragflügelkörper
- 13: Zweiter Tragflügelkörper
- 14: Mast
- 15: Erste Basis
- 16: Erste Bodenplatte
- 17: Erste Spitze
- 18: Zweite Basis
- 19: Zweite Bodenplatte

- 20: Zweite Spitze
- 21: Maximale Höhe
- 22: Anströmkante
- 23: Endleiste
- 24: Anströmkante
- 25: Endleiste
- 26: Segment
- 26a: Oberes Segment
- 26b: Unteres Segment
- 27: Erstes Ende
- 28: Erstes Lager
- 29: Zweites Lager

- 30: Zweites Ende
- 31: Schwenkeinrichtung
- 32: Querachse
- 33: Achsaufnahme
- 34: Teilzahnkranz
- 35: Zahnrad
- 36: Antriebsmittel
- 37: Segment
- 38: Außenhaut
- 39: Profilsehne

- 40: Spalt
- 41: Aluminiumsandwich-Struktur
- 42: Aluminiumplatten
- 43: Gewelltes Aluminiumblech
- 44: Hohlkörper
- 45: Schienensystem
- 46: Sollbruchstelle
- 47: Perforierung
- 48: Verstärkungskörper
- 49: Rippe

- 50: Holm
- 51: Hohlrohr

## Patentansprüche

1. Starrsegel (100) für Wasserfahrzeuge (10), insbesondere für große Schiffe wie Schüttguttransporter, Tanker, Autotransporter oder Bulker, umfassend einen Mast (14) und einen an dem Mast (14) gelagerten ersten Tragflügelkörper (12) mit einer Basis (15) und einer Spitze (17), wobei der Mast (14) durch die Basis (15) in den ersten Tragflügelkörper (12) eingeführt und innerhalb des ersten Tragflügelkörpers (12) angeordnet ist, wobei sich der Mast (14) ausgehend von der Basis (15) nicht über eine maximale Höhe (21) des ersten Tragflügelkörpers (12), insbesondere über weniger als 75 % der maximalen Höhe (21), erstreckt, **dadurch gekennzeichnet, dass** eine Schwenkeinrichtung (31) vorgesehen ist, wobei der Mast (14) an einem dem ersten Tragflügelkörper (12) abgewandten zweiten Ende (30) in der Schwenkeinrichtung (31) gelagert ist, wobei die Schwenkeinrichtung (31) ausgebildet ist, den Mast (14) in einem am Wasserfahrzeug (10) angeordneten Zustand aus einer vertikalen Ausrichtung heraus um einen Winkel zu verschwenken.

2. Starrsegel (100) nach Anspruch 1, **dadurch gekennzeichnet, dass** sich der Mast (14) über weniger als 50 %, bevorzugt über weniger als 40 %, besonders bevorzugt über weniger als 35 %, der maximalen Höhe (21) erstreckt.

3. Starrsegel (100) nach Anspruch 1 oder 2, **dadurch gekennzeichnet, dass** der Mast (14) an einem ersten Ende (27) im ersten Tragflügelkörper (12) in einem ersten Lager (28) gelagert ist, und/oder dass der Mast (14) in einem zweiten, insbesondere im Bereich der Basis (15) angeordneten, Lager (29) gelagert ist.

4. Starrsegel (100) nach einem der vorgenannten Ansprüche, **dadurch gekennzeichnet, dass** der Winkel mindestens 45°, bevorzugt mindestens 60°, insbesondere bevorzugt mindestens 80°, ganz besonders bevorzugt im Wesentlichen 90°, beträgt.

5. Starrsegel (100) nach einem der vorgenannten Ansprüche, **dadurch gekennzeichnet, dass** der Mast (14) am zweiten Ende (30) eine Querachse (32) aufweist, welche in einer Achsaufnahme (33) der Schwenkeinrichtung (31) schwenkbar gelagert ist.

6. Starrsegel (100) nach einem der vorgenannten Ansprüche, **dadurch gekennzeichnet, dass** die Schwenkeinrichtung (31) einen am zweiten Ende (30) des Mastes (14) angeordneten Teilzahnkranz (34) und ein am Wasserfahrzeug (10) anordbares und mit dem Teilzahnkranz (34) im Eingriff stehendes Antriebsmittel (36), insbesondere ein Zahnrad (35) oder eine Kette, umfasst, und/oder dass die Schwenkeinrichtung (31) einen Hydraulikzylinder umfasst.

7. Starrsegel (100) nach einem der vorgenannten Ansprüche, **dadurch gekennzeichnet, dass** der erste Tragflügelkörper (12) eine Anströmkante (22) und eine Endleiste (23) aufweist, und dass ein zweiter Tragflügelkörper (13), insbesondere eine Flosse, an der Endleiste (23) des ersten Tragflügelkörpers (13) schwenkbar angeordnet ist.

8. Starrsegel (100) nach Anspruch 7, **dadurch gekennzeichnet, dass** der zweite Tragflügelkörper (13) mehrere Segmente (26, 26a, 26b) aufweist, wobei bevorzugt die Segmente (26, 26a, 26b) unabhängig voneinander gegenüber dem ersten Tragflügelkörper (12) verschwenkbar sind.

9. Starrsegel (100) nach Anspruch 8, **dadurch gekennzeichnet, dass** der zweite Tragflügelkörper (13) teleskopierbar ist, wobei bevorzugt je ein oberes Segment (26, 26a) in ein benachbart angeordnetes unteres Segment (26, 26b) einfahrbar ist.

10. Starrsegel (100) nach Anspruch 8 oder 9, **dadurch gekennzeichnet, dass** die Segmente (26, 26a, 26b) in einem Schienensystem (45) geführt sind.

11. Starrsegel (100) nach einem der vorgenannten Ansprüche, **dadurch gekennzeichnet, dass**
der erste Tragflügelkörper (12) Rippen (49) und/oder Holme (50) aufweist, und/oder
der erste Tragflügelkörper (12) und/oder der zweite Tragflügelkörper (13) eine Außenhaut (38) aufweist, wobei die Außenhaut (38) bevorzugt eine Aluminiumsandwich-Struktur (41) und/oder eine Glasfaserstruktur umfasst.

12. Starrsegel (100) nach einem der vorgenannten Ansprüche, **dadurch gekennzeichnet, dass** sich das Starrsegel, insbesondere der erste Tragflügelkörper (12) und/oder der zweite Tragflügelkörper (12) in Richtung der Spitze (17, 20) hin verjüngt.

13. Starrsegel (100) nach einem der vorgenannten Ansprüche, **dadurch gekennzeichnet, dass** der erste Tragflügelkörper (12) und/oder der zweite Tragflügelkörper (13) eine Sollbruchstelle (46), insbesondere oberhalb des Masts (14), aufweist.

14. Wasserfahrzeug (10) mit einem Starrsegel (100) nach einem der Ansprüche 1 bis 13.

## Claims

1. Rigid sail (100) for vessels (10), in particular, for large ships such as bulk carriers, tankers, car transporters or bulkers, comprising a mast (14) and a first aerofoil wing body (12) mounted on the mast (14) with a base (15) and a head (17), wherein the mast (14) is inserted through the base (15) into the first aerofoil wing body (12) and is arranged within the first aerofoil wing body (12), wherein the mast (14), starting from the base (15), does not extend across a maximum height (21) of the first aerofoil wing body (12), in particular, across less than 75% of the maximum height (21), **characterized in that** a pivoting device (31) is provided, wherein the mast (14) is mounted in the pivoting device (31) at a second end (30) facing away from the first aerofoil wing body (12), wherein the pivoting device (31) is configured to pivot the mast (14) at an angle out of a vertical orientation when arranged on the vessel (10).

2. Rigid sail (100) according to claim 1, **characterized in that** the mast (14) extends across less than 50%, preferably across less than 40%, particularly preferably across less than 35%, of the maximum height (21).

3. Rigid sail (100) according to claim 1 or 2, **characterized in that** the mast (14) is mounted on a first end (27) in the first aerofoil wing body (12) in a first bearing (28), and/or that the mast (14) is mounted in a second bearing (29), in particular, one that is arranged in the region of the base (15).

4. Rigid sail (100) according to one of the aforementioned claims, **characterized in that** the angle is at least 45°, preferably at least 60°, particularly preferably at least 80°, most preferably, essentially 90°.

5. Rigid sail (100) according to one of the aforementioned claims, **characterized in that** the mast (14) has a transverse axle (32) on the second end (30), which is swivel-mounted in an axle receptacle (33) of the pivoting device (31).

6. Rigid sail (100) according to one of the aforementioned claims, **characterized in that** the pivoting device (31) comprises a partial ring gear (34) arranged on the second end (30) of the mast (14) and a propulsion means (36) that can be arranged on the vessel (10) and engages with the partial ring gear (34), in particular, a toothed gear (35) or a chain, and/or that the pivoting device (31) comprises a hydraulic cylinder.

7. Rigid sail (100) according to one of the aforementioned claims, **characterized in that** the first aerofoil wing body (12) has a leading edge (22) and a trailing edge (23) and that a second aerofoil wing body (13), in particular, a fin, is arranged on the trailing edge (23) of the first aerofoil wing body (12) in a swivel-mounted manner.

8. Rigid sail (100) according to claim 7, **characterized in that** the second aerofoil wing body (13) has a plurality of segments (26, 26a, 26b), wherein the segments (26, 26a, 26b) preferably can be pivoted independently of each other with relation to the first aerofoil wing body (12).

9. Rigid sail (100) according to claim 8, **characterized in that** the second aerofoil wing body (13) is telescopable, wherein, preferably, one upper segment (26, 26a) can be respectively retracted into an adjacently arranged lower segment (26, 26b)

10. Rigid sail (100) according to claim 8 or 9, **characterized in that** the segments (26, 26a, 26b) are guided in a rail system (45).

11. Rigid sail (100) according to one of the aforementioned claims, **characterized in that**
the first aerofoil wing body (12) has ribs (49) and/or struts (50), and/or
the first aerofoil wing body (12) and/or the second aerofoil wing body (13) has an outer shell (38), wherein the outer shell (38) preferably comprises an aluminum-sandwich structure (41) and/or a fibreglass structure.

12. Rigid sail (100) according to one of the aforementioned claims, **characterized in that** the rigid sail, in particular, the first aerofoil wing body (12) and/or the second aerofoil wing body (13) taper(s) in the direction of the head (17, 20).

13. Rigid sail (100) according to one of the aforementioned claims, **characterized in that** the first aerofoil wing body (12) and/or the second aerofoil wing body (13) has/have a predetermined breaking point (46), in particular, above the mast (14).

14. Vessel (10) with a rigid sail (100) according to any one of claims 1 to 13.

## Revendications

1. Voile rigide (100) pour véhicules nautiques (10), en particulier pour de grands navires tels que des transporteurs de marchandises en vrac, des pétroliers, des transporteurs de voitures ou des vraquiers, comprenant un mât (14) et un premier corps d'aile porteuse (12) monté sur le mât (14) et ayant une base (15) et une pointe (17), le mât (14) étant introduit dans le premier corps d'aile porteuse (12) par la base (15) et étant disposé à l'intérieur du premier corps d'aile porteuse (12), le mât (14) ne s'étendant pas, à partir de la base (15), au-delà d'une hauteur maximale (21) du premier corps d'aile porteuse (12), en particulier au-delà de moins de 75 % de la hauteur maximale (21),
**caractérisé en ce qu'**il est prévu un dispositif de pivotement (31), le mât (14) étant monté dans le dispositif de pivotement (31) à une deuxième extrémité (30) opposée au premier corps d'aile porteuse (12), le dispositif de pivotement (31) étant conçu pour faire pivoter le mât (14) d'un angle à partir d'une orientation verticale dans un état disposé sur le véhicule nautique (10).

2. Voile rigide (100) selon la revendication 1, **caractérisée en ce que** le mât (14) s'étend sur moins de 50 %, de préférence sur moins de 40 %, de manière particulièrement préférée sur moins de 35 %, de la hauteur maximale (21).

3. Voile rigide (100) selon la revendication 1 ou 2, **caractérisée en ce que** le mât (14) est logé à une première extrémité (27) dans le premier corps d'aile porteuse (12) dans un premier palier (28), et/ou **en ce que** le mât (14) est logé dans un deuxième palier (29), disposé en particulier dans la zone de la base (15).

4. Voile rigide (100) selon l'une des revendications précédentes, **caractérisée en ce que** l'angle est d'au moins 45°, de préférence d'au moins 60°, de préférence d'au moins 80°, de manière tout à fait préférée essentiellement de 90°.

5. Voile rigide (100) selon l'une des revendications précitées, **caractérisée en ce que** le mât (14) présente à la deuxième extrémité (30) un axe transversal (32) qui est monté pivotant dans un logement d'axe (33) du dispositif de pivotement (31).

6. Voile rigide (100) selon l'une des revendications précédentes, **caractérisée en ce que** le dispositif de pivotement (31) comprend une couronne dentée partielle (34) disposée à la deuxième extrémité (30) du mât (14) et un moyen d'entraînement (36) pouvant être disposé sur le véhicule nautique (10) et en prise avec la couronne dentée partielle (34), notamment une roue dentée (35) ou une chaîne, et/ou **en ce que** le dispositif de pivotement (31) comprend un vérin hydraulique.

7. Voile rigide (100) selon l'une des revendications précédentes, **caractérisée en ce que** le premier corps d'aile (12) présente un bord d'attaque (22) et un bord de fuite (23), et **en ce qu'**un deuxième corps d'aile porteuse (13), en particulier un aileron, est disposé de manière pivotante sur le bord de fuite (23) du premier corps d'aile porteuse (13).

8. Voile rigide (100) selon la revendication 7, **caractérisée en ce que** le deuxième corps d'aile porteuse (13) présente plusieurs segments (26, 26a, 26b), les segments (26, 26a, 26b) pouvant de préférence pivoter indépendamment les uns des autres par rapport au premier corps d'aile porteuse (12).

9. Voile rigide (100) selon la revendication 8, **caractérisée en ce que** le deuxième corps d'aile porteuse (13) est télescopique, à chaque fois un segment supérieur (26, 26a) pouvant de préférence être introduit dans un segment inférieur (26, 26b) voisin.

10. Voile rigide (100) selon la revendication 8 ou 9, **caractérisée en ce que** les segments (26, 26a, 26b) sont guidés dans un système de rails (45).

11. Voile rigide (100) selon l'une des revendications précédentes, **caractérisée en ce que**
le premier corps d'aile porteuse (12) présente des nervures (49) et/ou des longerons (50), et/ou
le premier corps d'aile porteuse (12) et/ou le deuxième corps d'aile porteuse (13) présente une peau extérieure (38), la peau extérieure (38) comprenant de préférence une structure sandwich en aluminium (41) et/ou une structure en fibre de verre.

12. Voile rigide (100) selon l'une des revendications précédentes, **caractérisée en ce que** la voile rigide, en particulier le premier corps d'aile porteuse (12) et/ou le deuxième corps d'aile porteuse (12), se rétrécit en direction de la pointe (17, 20).

13. Voile rigide (100) selon l'une des revendications précédentes, **caractérisée en ce que** le premier corps d'aile porteuse (12) et/ou le deuxième corps d'aile porteuse (13) présente un point destiné à la rupture (46), en particulier au-dessus du mât (14).

14. Véhicule nautique (10) comprenant une voile rigide (100) selon l'une quelconque des revendications 1 à 13.
